# EUROPÄISCHE PATENTANMELDUNG

(11) **EP 0 759 326 A2**
(43) Veröffentlichungstag der Anmeldung: **26.02.1997**
(21) Anmeldenummer: 96113150.5
(22) Anmeldetag: 16.08.1996
(51) Int. Cl.: B01J 49/00, C02F 1/42

(54) **Salzlösebehälter**

(30) Priorität: 18.08.1995 DE 19530384
(71) Anmelder: BWT Wassertechnik GmbH, 69198 Schriesheim (DE)
(72) Erfinder: Dobrocsi, Bela, 69469 Weinheim (DE); Wacker, Karl-Fiedrich, 68723 Planstadt (DE)
(74) Vertreter: Wolf, Eckhard, Dr.-Ing.

(57) **Zusammenfassung**

Die Erfindung betrifft einen Salzlösebehälter mit einem im oberen Behälterbereich angeordneten Salzraum (15) zur Aufnahme von körnigem wasserlöslichem Salz, mit einem im unteren Behälterbereich angeordneten, durch ein für das körnige Salz undurchlässiges Trennelement (16) vom Salzraum (15) getrennten, mit dem Salzraum (15) über Flüssigkeitsöffnungen (21,26) kommunizierenden Soleraum (17), mit einer niveaugeregelten Wasserzuführung zur Einstellung eines sich über die Höhe des Soleraums (17) erstreckenden, bis in den Salzraum (15) reichenden Flüssigkeitsstandes und mit einer in den Soleraum (17) eintauchenden Absaugeinrichtung (36). Das Trennelement (16) weist dabei eine von oben her in den Soleraum (17) eintauchende, sich zumindest über einen Teil der Höhe des Soleraums (17) erstreckende, flüssigkeitsundurchlässige Trennwand auf, wobei die Flüssigkeitsöffnungen (21,26) im oberen und im unteren Bereich der Trennwand jeweils innerhalb des eingestellten Flüssigkeitsstandes angeordnet sind.

## Beschreibung

Die Erfindung betrifft einen Salzlösebehälter mit einem im oberen Behälterbereich angeordneten Salzraum zur Aufnahme von körnigem wasserlöslichem Salz, mit einem im unteren Behälterbereich angeordneten, durch ein für das körnige Salz undurchlässiges Trennelement vom Salzraum getrennten, mit dem Salzraum über Flüssigkeitsöffnungen kommunizierenden Soleraum, mit einer niveaugeregelten Wasserzuführung zur Einstellung eines sich über die Höhe des Soleraums erstreckenden, bis in den Salzraum reichenden Flüssigkeitsstandes und mit einer in den Soleraum eintauchenden Absaugeinrichtung.

Derartige Salzlösebehälter werden in nach dem Ionenaustauscherprinzip arbeitenden Wasseraufbereitungsanlagen verwendet. Bei solchen Wasseraufbereitungsanlagen muß die mit einem Ionenaustauscherharz gefüllte Ionenaustauschersäule in regelmäßigen Zeitabständen zu Regenerationszwecken mit einer Salzlösung (Sole) gespült werden. Nach dem Spülen mit der Sole wird überschüssiges Salz mit Leitungswasser ausgewaschen und es erfolgt meist auch noch eine Rückspülung im Gegenstrom, um das Harzbett aufzulockern und eventuell vorhandene Schwebeteilchen zu entfernen. Der Salzlösebehälter enthält einen Vorrat an körnigem wasserlöslichem Salz und an Sole, wobei bei einer einzigen Regeration einer Ionenaustauschersäule nur ein Teil der vorhandenen Sole verbraucht wird. Der jeweils verbrauchte Anteil an Sole muß nach einer erfolgten Regeneration erneuert werden. Hierzu wird frisches Nachfüllwasser in den Solebehälter eingefüllt und mit dem Salzvorrat in Kontakt gebracht. Dies führt zur Bildung von frischer Sole und der Regenerationszyklus kann von neuem beginnen, sobald die gewünschte Solekonzentration erreicht ist.

Ein bekannter Behälter dieser Art weist einen horizontalen, mit einer Vielzahl von Löchern versehenen Stützboden auf, der im Abstand vom Boden des Behälters angeordnet ist. Oberhalb dieses Stützbodens befindet sich der Salzvorrat und unterhalb des Stützbodens der Solevorrat. Wenn nach der Regeneration einer Ionenaustauschersäule Wasser in den Behälter nachgefüllt wird, um ausreichend Sole für einen nachfolgenden Regeneriervorgang bereitzustellen, dauert es einen gewissen Zeitraum, bis der Flüssigkeitsspiegel in dem Behälter den Stützboden erreicht und übersteigt. Erst danach ist die Flüssigkeit in Kontakt mit dem körnigen Salzvorrat, so daß der Lösevorgang beginnen kann. Versuche haben gezeigt, daß es bei einer derartigen Anordnung vergleichsweise lang dauert, bis die gewünschte Solekonzentration von etwa 25% erreicht ist, da nur wenig Austausch zwischen den Flüssigkeitsbereichen unterschiedlicher Konzentration stattfindet. Entsprechend verzögert sich ein nachfolgender weiterer Regeneriervorgang und es müssen überdimensionierte Ionenaustauschersäulen eingesetzt werden.

Die Aufgabe der Erfindung besteht daher darin, einen Salzlösebehälter zu schaffen, in dem die gewünschte Solekonzentration in kürzester Zeit erreicht wird.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von dem Gedanken aus, daß eine Zirkulationsströmung der Flüssigkeit den Lösevorgang erheblich beschleunigen kann. Zu diesem Zweck weist das Trennelement eine von oben her in den Soleraum eintauchende, sich zumindest über einen Teil der Höhe des Soleraums erstreckende, flüssigkeitsundurchlässige Trennwand auf, wobei die Flüssigkeitsöffnungen im oberen und im unteren Bereich der Trennwand jeweils innerhalb des eingestellten Flüssigkeitsstandes angeordnet sind. Frisches Nachfüllwasser wird bei Bedarf so lange zugeführt, bis sich der Wasserspiegel oberhalb der Flüssigkeitsöffnungen im oberen Bereich der Trennwand befindet. Das durch die Flüssigkeitsöffnungen in den Salzraum gelangende Nachfüllwasser löst das sich dort befindliche Salz an. Dabei bildet sich eine Sole, deren Dichte größer ist als die des Nachfüllwassers. Die schwerere Sole sinkt ab und verdrängt dabei tieferliegende Flüssigkeit geringerer Dichte, so daß die Sole im Soleraum innerhalb der Trennwand nach unten strömt, während die Sole geringerer Dichte im Soleraum außerhalb der Trennwand nach oben strömt. Daraus resultiert eine Zirkulationsströmung, die zu einer schnellen Aufsalzung des Nachfüllwassers führt. Die Zeit für die Bildung einer mit dem zu lösenden Salz gesättigten Sole wird dadurch erheblich reduziert, so daß Regenerationen des Ionenaustauscherharzes in kürzeren Zeitabständen durchgeführt werden können. Dies wiederum hat zur Folge, daß entsprechend kleinere Austauschereinheiten verwendet werden können.

Eine bevorzugte Ausführungsform der Erfindung sieht vor, daß sich der Soleraum nach oben hin bis zu den oberen Flüssigkeitsöffnungen der Trennwand erstreckt.

Als besonders vorteilhaft für das Zustandekommen einer Zirkulationsströmung hat sich erwiesen, wenn die Trennwand trichterförmig ausgebildet ist und mit ihrem oberen Rand gegen eine Stützfläche im Behälterinneren anliegt. Dabei können die oberen Flüssigkeitsöffnungen durch Schlitze oder Eindellungen im oberen Rand der trichterförmigen Trennwand gebildet sein. Der obere Rand der trichterförmigen Trennwand kann auch einen radial überstehenden, auf einer schulterartigen Stützfläche im Behälterinneren abgestützten, die oberen Flüssigkeitsöffnungen enthaltenden Flansch aufweisen.

Zur Abstützung der trichterförmigen Trennwand greift diese vorteilhaft mit einem nach unten weisenden Zentrierstutzen in eine am Boden des Soleraums angeordnete Zentrieraufnahme ein. Die Zentrieraufnahme kann ein über den Boden des Soleraums überstehendes Zapfenelement aufweisen, auf das der Zentrierstutzen aufsteckbar ist. Alternativ hierzu kann die Zentrieraufnahme eine den Zentrierstutzen umfassende Rastausnehmung aufweisen. Vorteilhafterweise werden dann die unteren Flüssigkeitsöffnungen durch Spalträume zwischen dem Zentrierstutzen und der Zentrieraufnahme gebildet.

Um das Nachfüllwasser zu- und die Sole abführen zu können, ohne daß die Zu- bzw. Abführöffnung durch Salzkörner blockiert wird, ist zweckmäßig ein den Salzraum und den Soleraum durchdringender, gegen Salzzutritt abgedichteter, mit dem Soleraum kommunizierender Schacht vorgesehen, in welchem die Absaugeinrichtung und ein Niveauregler für die Wasserzuführung angeordnet sind. Die trichterförmige Trennwand weist dann vorteilhaft einen exzentrischen achsparallelen Durchbruch und eine Einwölbung für den Durchtritt des Schachtes auf. Damit das Nachfüllwasser in den Soleraum bzw. den Salzraum und die Sole zu der Absaugeinrichtung gelangen kann, ist der Schacht in einer bevorzugten Ausführungsform bodenseitig zum Soleraum offen und weist eine über den oberen Flüssigkeitsöffnungen des Trennelements innerhalb des eingestellten Flüssigkeitsstandes angeordnete, für körniges Salz undurchlässige Flüssigkeitsöffnung auf.

Bei einer bevorzugten Ausführungsform ist der Niveauregler als in einer Wasserzuführleitung angeordnetes Schwimmerventil ausgebildet. Der Schwimmer dieses Schwimmerventils ist dabei so angeordnet, daß das Ventil bei Erreichen des oberen, über den oberen Flüssigkeitsöffnungen liegenden Flüssigkeitsstandes das Ventil schließt und die Wasserzuführung unterbricht. Eine weitere Vereinfachung wird dadurch erreicht, daß die Absaugeinrichtung eine gemeinsame Soleabsaug- und Wasserzuführleitung aufweist.

Besonders wirtschaftlich lassen sich der Behälter sowie das Trennelement als Formteile aus Kunststoff oder Metallblech herstellen, wobei das verwendete Material gegen die korrodierende Wirkung der Sole widerstandsfähig sein sollte.

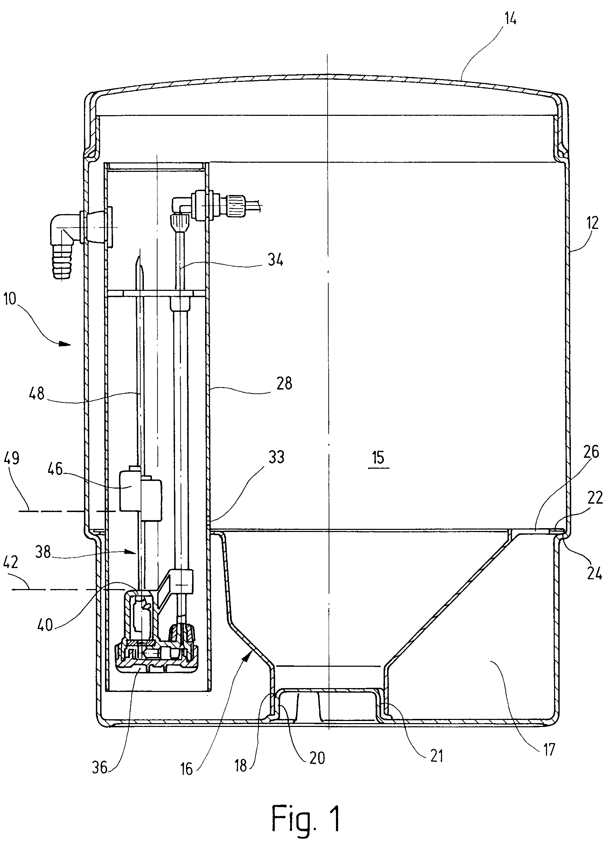

Im folgenden wird die Erfindung anhand der in der Zeichnung dargestellten Ausführungsbeispiele näher erläutert. Es zeigen
- Fig. 1: einen Schnitt durch einen Salzlösebehälter in einer ersten Ausführungsform;

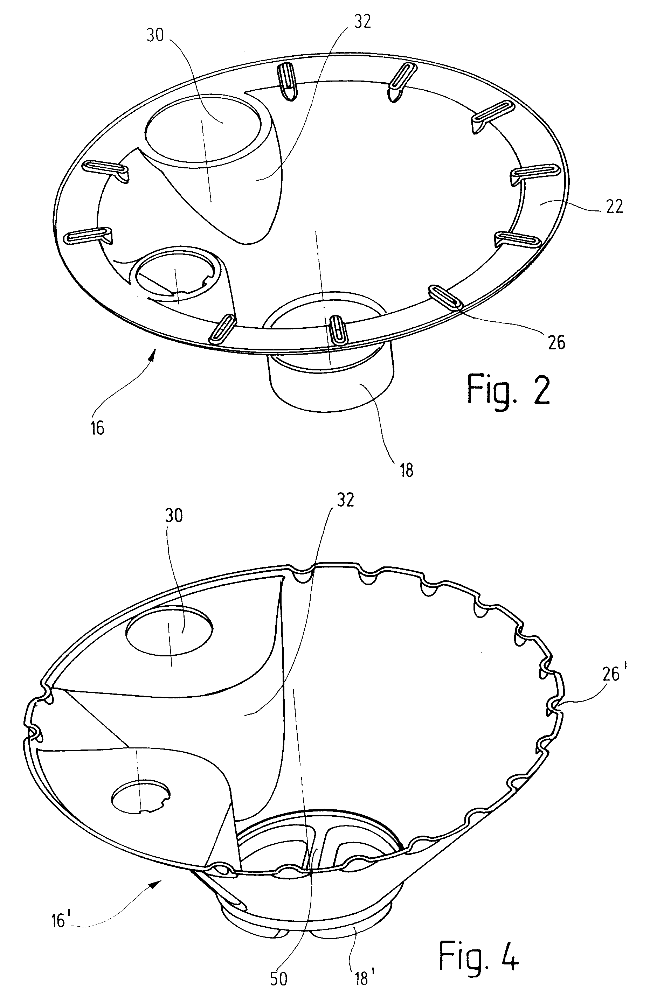

- Fig. 2: eine perspektivische Ansicht der trichterförmigen Trennwand gemäß Fig. 1;
- Fig. 3: einen Schnitt durch eine weitere Ausführungsform eines Salzlösebehälters; und
- Fig. 4: eine Perspektivische Ansicht der trichterförmigen Trennwand gemäß Fig. 3.

Der in der Zeichnung dargestellte Salzlösebehälter 10 ist für eine nach dem Ionenaustauscherprinzip arbeitende Wasseraufbereitungsanlage bestimmt. Er besteht aus einem im wesentlichen zylindrischen Gehäuse 12 mit einem Deckel 14. Im Inneren des Gehäuses 12 befindet sich eine trichterförmige Trennwand 16, die einen Salzraum 15 im oberen Behälterbereich von einem Soleraum 17 im unteren Behälterbereich trennt. Die Trennwand 16 ist mit ihrem Zentrierstutzen 18 auf ein über den Boden des Soleraums 17 überstehendes Zapfenelement 20 aufsteckbar. Das Zapfenelement 20 ist dabei derart ausgebildet, daß einerseits Flüssigkeit aus dem Innenbereich der trichterförmigen Trennwand 16 ausströmen kann, daß jedoch andererseits das sich innerhalb und oberhalb der trichterförmigen Trennwand befindliche körnige Salz zurückgehalten wird. Zu diesem Zweck weist das Zapfenelement 20 eine Anzahl von Flüssigkeitsöffnungen bildenden Strömungskanälen 21 auf. Der obere Rand der trichterförmigen Trennwand 16 ist als radial überstehender Flansch 22 ausgebildet, der sich auf einer schulterartigen Stützfläche 24 des Gehäuses 12 abstützt und mit einer Anzahl von radial ausgerichteten, schlitzartigen Flüssigkeitsöffnungen 26 versehen ist.

Die Absaugeinrichtung für die Sole und der Niveauregler für die Wasserzuführung sind in einem den Salzraum 15 und den Soleraum 17 durchdringenden, gegen Salzzutritt abgedichteten und mit dem Soleraum 17 kommunizierenden Schacht 28 angeordnet. Der Schacht 28 durchsetzt einen exzentrischen achsparallelen Durchbruch 30 und eine Einwölbung 32 der trichterförmigen Trennwand 16. Um das Absaugen der Sole aus dem Soleraum 17 und die Zufuhr von Nachfüllwasser zu ermöglichen, ist der Schacht 28 bodenseitig zum Soleraum 17 offen und weist eine über den Schlitzen 26 der trichterförmigen Trennwand 16 angeordnete, für körniges Salz undurchlässige Flüssigkeitsöffnung 33 auf. Eine gemeinsame Soleabsaug- und Wasserzuführleitung 34 ist im oberen Bereich des Schachts 28 und des Gehäuses 12 durch deren Wände nach außen geführt. Die Leitung 34 erstreckt sich vertikal in dem Schacht 28 und weist an ihrem unteren Ende die Absaugeinrichtung 36 auf, welche eine im Abstand vom Gehäuseboden angeordnete und mittels eines Schwimmerventils 38 freigebbare und verschließbare Ventilöffnung 40 aufweist.

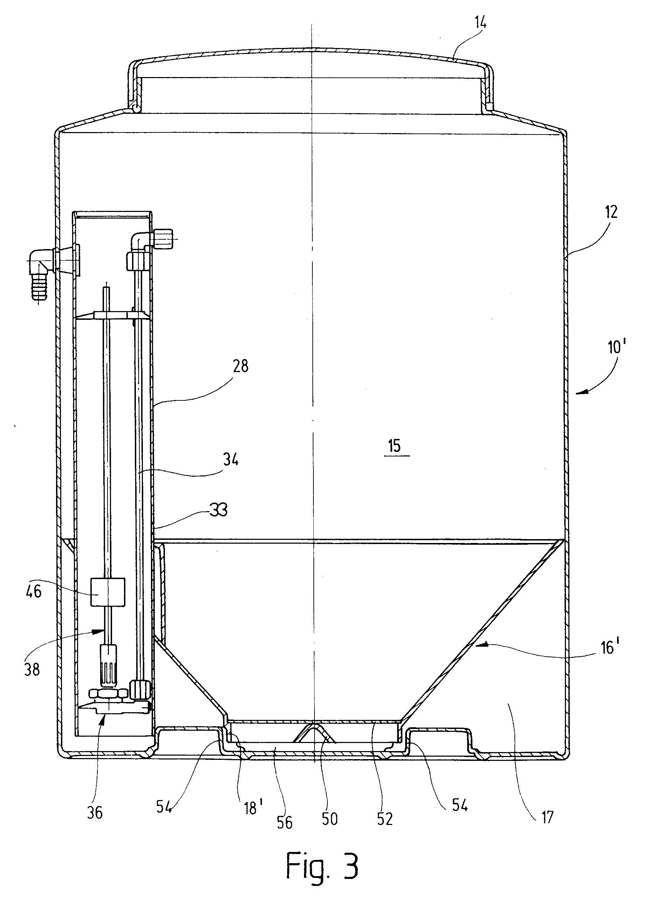

Die in Fig. 4 dargestellte trichterförmige Trennwand 16' eignet sich besonders für größere Salzlösebehälter 10' (Fig. 3) und hat zu diesem Zweck an seinem unteren Ende einen Zentrierstutzen 18' mit einem Mittelsteg 50, auf den eine perforierte Bodenplatte 52 auflegbar ist. Der Salzlösebehälter 10' weist an seinem Boden eine Anzahl von nach innen gerichteten Noppen 54 auf, die die Trennwand 16' derart abstützen, daß zwischen dem unteren Ende des Zentrierstutzens 18' und dem Behälterboden ein von der Sole durchströmbarer Spalt 56 verbleibt. An ihrem oberen Rand weist die Trennwand 16' anstatt eines Flansches mit Schlitzen eine Vielzahl von über den Umfang verteilten, von der Flüssigkeit durchströmbaren, aber für das körnige Salz undurchlässige Eindellungen 26' auf.

Die Absaugeinrichtung 36 arbeitet wie folgt:
Nach einer erfolgten Regeneration einer nicht dargestellten Ionenaustauschersäule, d.h. nach Verbrauch einer bestimmten Teilmenge des Solevorrats, befindet sich der Solespiegel auf der mit dem Bezugszeichen 42 gekennzeichneten Höhe, die durch den Abstand der Ventilöffnung 40 vom Gehäuseboden bestimmt ist. Das Schwimmerventil 38 befindet sich in seiner unteren, die Ventilöffnung 40 freigebenden Stellung. Die Steuerung der Zu- und Abfuhr des Nachfüllwassers bzw. der Sole erfolgt über eine sich außerhalb des Salzlösebehälters 10 befindende Vorrichtung. Diese schaltet automatisch auf die Zufuhr von Nachfüllwasser um, wenn die Sole abgeführt und der untere Solespiegel 42 erreicht worden ist. Das Nachfüllwasser strömt dann so lange in den Behälter, bis das Schwimmerventil 38 angehoben und die Wasserzufuhr unterbrechend gegen seinen Sitz gepreßt wird. Die Höhe des Schwimmerkörpers 46 auf dem Ventilschaft 48 und damit der obere Flüssigkeitsspiegel 49 läßt sich durch Verschieben des Schwimmerkörpers entlang dem Ventilschaft einstellen. Damit die Zirkulationsströmung zustande kommen kann, liegt der obere Flüssigkeitsspiegel 49 immer oberhalb der Schlitze 26 in der trichterförmigen Trennwand 16.

Die gegenüber herkömmlichen Salzlösebehältern kürzere Solebildungszeit beruht auf zwei Umständen. Zum einen steigt bereits während des Nachfüllens der Flüssigkeitsspiegel in dem Salzraum 15 an, so daß bereits frühzeitig neue Sole gebildet wird. Die sich in dem Soleraum 17 befindende Flüssigkeit ist eine verdünnte Sole, die sich aus der Restsole und dem Nachfüllwasser zusammensetzt. Mit der sich in dem Salzraum 15 bildenden Sole findet kein oder nur ein geringer Austausch statt. Sobald der Flüssigkeitsspiegel den oberen Rand der Trennwand 16 erreicht und überstiegen hat, strömt auch Flüssigkeit aus dem Soleraum 17 durch die Schlitze 26 in den Salzraum 15. Jetzt kann ein vermehrter Austausch zwischen der Sole in dem Salzraum 15 und der verdünnten Sole in dem Soleraum 17 stattfinden, da die konzentrierte Sole eine höhere Dichte als die durch das Nachfüllwasser verdünnte Sole im Soleraum 17 aufweist und innerhalb der Trennwand 16 nach unten und durch die unteren Flüssigkeitsöffnungen 21 in den Soleraum 17 strömt. Die Flüssigkeit in dem Soleraum 17 wird dabei nach oben und durch die Schlitze 26 in den Salzraum 15 verdrängt, so daß eine Zirkulationsströmung durch die unteren Flüssigkeitsöffnungen 21 und die Schlitze 26 zustande kommt, die so lange andauert, bis die gesamte Flüssigkeit zu einer gesättigten Sole mit einem Salzanteil von etwa 24 Gewichtsprozent geworden ist.

Das für die Regeneration des Ionenaustauscherharzes verwendete Industriesalz (NaCl) weist unlösliche Verunreinigungen auf, die bei der Lösung des Salzes freigesetzt werden und sich im Laufe der Zeit als Sediment am Boden des Behälters absetzen. Um ein Zusetzen der unteren Flüssigkeitsöffnungen 21 durch das sich bildende Sediment zu vermeiden, sind diese im Abstand vom Boden des Behälters angeordnet.

Zusammenfassend ist folgendes festzustellen: Die Erfindung betrifft einen Salzlösebehälter mit einem im oberen Behälterbereich angeordneten Salzraum 15 zur Aufnahme von körnigem wasserlöslichem Salz, mit einem im unteren Behälterbereich angeordneten, durch ein für das körnige Salz undurchlässiges Trennelement 16 vom Salzraum 15 getrennten, mit dem Salzraum 15 über Flüssigkeitsöffnungen 21,26 kommunizierenden Soleraum 17, mit einer niveaugeregelten Wasserzuführung zur Einstellung eines sich über die Höhe des Soleraums 17 erstreckenden, bis in den Salzraum 15 reichenden Flüssigkeitsstandes und mit einer in den Soleraum 17 eintauchenden Absaugeinrichtung 36. Das Trennelement 16 weist dabei eine von oben her in den Soleraum 17 eintauchende, sich zumindest über einen Teil der Höhe des Soleraums erstreckende, flüssigkeitsundurchlässige Trennwand 16 auf, wobei die Flüssigkeitsöffnungen 21,26 im oberen und im unteren Bereich der Trennwand jeweils innerhalb des eingestellten Flüssigkeitsstandes angeordnet sind.

## Patentansprüche

1. Salzlösebehälter, insbesondere für eine nach dem Ionenaustauscherprinzip arbeitende Wasseraufbereitungsanlage, mit einem im oberen Behälterbereich angeordneten Salzraum (15) zur Aufnahme von körnigem Wasserlöslichem Salz, mit einem im unteren Behälterbereich angeordneten, durch ein für das körnige Salz undurchlässiges Trennelement (16) vom Salzraum (15) getrennten, mit dem Salzraum (15) über Flüssigkeitsöffnungen (21,26) kommunizierenden Soleraum (17) , mit einer niveaugeregelten Wasserzuführung zur Einstellung eines sich über die Höhe des Soleraums (17) erstreckenden, bis in den Salzraum (15) reichenden Flüssigkeitsstandes und mit einer in den Soleraum (17) eintauchenden Absaugeinrichtung (36), **dadurch gekennzeichnet**, daß das Trennelement (16) eine von oben her in den Soleraum (17) eintauchende, sich zumindest über einen Teil der Höhe des Soleraums (17) erstreckende, flüssigkeitsundurchlässige Trennwand (16) aufweist, wobei die Flüssigkeitsöffnungen (21,26) im oberen und im unteren Bereich der Trennwand jeweils innerhalb des eingestellten Flüssigkeitsstandes angeordnet sind.

2. Salzlösebehälter nach Anspruch 1, **dadurch gekennzeichnet**, daß sich der Soleraum (17) nach oben hin bis zu den oberen Flüssigkeitsöffnungen (26) der Trennwand (16) erstreckt.

3. Salzlösebehälter nach Anspruch 1 oder 2, **dadurch** **gekennzeichnet**, daß die Trennwand (16) trichterförmig ausgebildet ist und mit ihrem oberen Rand gegen eine Stützfläche im Behälterinneren anliegt.

4. Salzlösebehälter nach Anspruch 3, **dadurch gekennzeichnet**, daß die oberen Flüssigkeitsöffnungen (26) durch Schlitze oder Eindellungen im oberen Rand der trichterförmigen Trennwand (16) gebildet sind.

5. Salzlösebehälter nach Anspruch 3 oder 4, **dadurch gekennzeichnet**, daß der obere Rand der trichterförmigen Trennwand (16) einen radial überstehenden, auf einer schulterartigen Stützfläche (24) im Behälterinneren abgestützten, die oberen Flüssigkeitsöffnungen enthaltenden Flansch (22) aufweist.

6. Salzlösebehälter nach einem der Ansprüche 3 bis 5, **dadurch gekennzeichnet**, daß die trichterförmige Trennwand (16) mit einem nach unten weisenden Zentrierstutzen (18) in eine am Boden des Soleraums (17) angeordnete Zentrieraufnahme eingreift.

7. Salzlösebehälter nach Anspruch 6, **dadurch gekennzeichnet**, daß die Zentrieraufnahme ein über den Boden des Soleraums (17) überstehendes Zapfenelement (20) aufweist, auf das der Zentrierstutzen (18) aufsteckbar ist.

8. Salzlösebehälter nach Anspruch 6, **dadurch gekennzeichnet**, daß die Zentrieraufnahme eine den Zentrierstutzen (18) umfassende Rastausnehmung aufweist.

9. Salzlösebehälter nach einem der Ansprüche 6 bis 8, **dadurch gekennzeichnet**, daß die unteren Flüssigkeitsöffnungen durch Spalträume (21) zwischen dem Zentrierstutzen (18) und der Zentrieraufnahme gebildet sind.

10. Salzlösebehälter nach einem der Ansprüche 1 bis 9, **gekennzeichnet durch** einen den Salzraum (15) und den Soleraum (17) durchdringenden, gegen Salzzutritt abgedichteten, mit dem Soleraum (17) kommunizierenden Schacht (28), in welchem die Absaugeinrichtung (36) und ein Niveauregler (38) für die Wasserzuführung angeordnet sind.

11. Salzlösebehälter nach Anspruch 10, **dadurch gekennzeichnet**, daß die trichterförmige Trennwand (16) einen exzentrischen achsparallelen Durchbruch (30) und eine Einwölbung (32) für den Durchtritt des Schachtes (28) aufweist.

12. Salzlösebehälter nach Anspruch 10 oder 11, **dadurch gekennzeichnet**, daß der Schacht (28) bodenseitig zum Soleraum (17) offen ist.

13. Salzlösebehälter nach einem der Ansprüche 10 bis 12, **dadurch gekennzeichnet**, daß der Schacht (28) eine über den oberen Flüssigkeitsöffnungen (26) des Trennelements innerhalb des eingestellten Flüssigkeitsstandes angeordnete, für körniges Salz undurchlässige Flüssigkeitsöffnung (33) aufweist.

14. Salzlösebehälter nach einem der Ansprüche 10 bis 13, **dadurch gekennzeichnet**, daß der Niveauregler (38) als in einer Wasserzuführleitung (34) angeordnetes Schwimmerventil ausgebildet ist.

15. Salzlösebehälter nach einem der Ansprüche 1 bis 14, **dadurch gekennzeichnet**, daß die Absaugeinrichtung (36) eine gemeinsame Soleabsaug- und Wasserzuführleitung (34) aufweist.

16. Salzlösebehälter nach einem der Ansprüche 1 bis 15, **dadurch gekennzeichnet**, daß das Trennelement (16) als Formteil aus Kunststoff oder Metallblech ausgebildet ist.
